# EUROPÄISCHE PATENTSCHRIFT

(11) **EP 4 163 614 B1**
(45) Veröffentlichungstag und Bekanntmachung des Hinweises auf die Patenterteilung: **06.08.2025**
(21) Anmeldenummer: 21020500.1
(22) Anmeldetag: 07.10.2021
(51) Int. Cl.: G01M 1/22, G01M 7/04, B06B 1/16, H02K 7/06, G01M 1/02

(54) **AUTOMATISCHE KALIBRIERVORRICHTUNG FÜR AUSWUCHTMASCHINEN UND VERFAHREN ZU AUTOMATISCHEN KALIBRIERUNG**
AUTOMATIC CALIBRATION DEVICE FOR BALANCING MACHINES AND METHOD FOR AUTOMATIC CALIBRATION
DISPOSITIF D'ÉTALONNAGE AUTOMATIQUE POUR MACHINES D'ÉQUILIBRAGE ET PROCÉDÉ D'ÉTALONNAGE AUTOMATIQUE

(43) Veröffentlichungstag der Anmeldung: 12.04.2023
(73) Patentinhaber: Hofmann Mess- und Auswuchttechnik GmbH & Co. KG, 64319 Pfungstadt (DE)
(72) Erfinder: Fischer, Georg, 64823 Groß-Umstadt (DE); Puff, Matthias, 64625 Bensheim (DE)
(74) Vertreter: Benz, Jürgen

(56) Entgegenhaltungen:
- EP-A1- 2 280 264
- JP-A- 2011 080 894
- US-A1- 2003 005 763
- US-A1- 2019 271 609

## Beschreibung

### GEBIET DER ERFINDUNG

Die Erfindung betrifft eine neuartige automatische Kalibriervorrichtung für statische oder dynamische Auswuchtmaschinen, gemäß dem beigefügten Anspruch 1, sowie ein Verfahren zur automatischen Erst-Kalibrierung und zur spontan oder zyklisch vorgenommenen automatischen Kalibriekontrolle von Auswuchtmaschinen, gemäß dem beigefügten Anspruch 10, ohne die Notwendigkeit weiterhin Meister- oder Referenzrotoren einzusetzen.

Die Erfindung betrifft insbesondere horizontale oder vertikale Ein- oder Zwei-Ebenen Auswuchtmaschinen zum Auswuchten von starren Rotoren, welche mit derartigen automatischen Kalibriervorrichtungen ausgestattet werden können.

### HINTERGRUND UND AUFGABE DER ERFINDUNG

Rotierende Maschinenteile kommen in fast allen maschinellen Anlagen vor. Je schneller sie sich drehen, umso besser müssen sie wegen der auftretenden Fliehkräfte und der dadurch verursachten Vibrationen ausgewuchtet sein, da mangelhaft ausgewuchtete Rotoren periodische Erregerkräfte verursachen, die sich ungünstig auf die Lager und deren Lebensdauer, das Geräusch- und Schwingungsverhalten und den Prozess einer Anlage auswirken können. Das Auswuchten dient somit der Qualitätssicherung des betreffenden Maschinenteils sowie der Prozessfähigkeit und Sicherheit der Anlage und ist somit unverzichtbar.

Auswuchtmaschinen müssen bei erster Inbetriebnahme oder nach Wartungen oder Veränderungen jeglicher Art neu- oder re-kalibriert werden. Je nach Einsatzgebiet ist es auch zweckmäßig in bestimmten wiederkehrenden Abständen Kalibrierkontrollen durchzuführen.

Bei der Kalibrierung wird mit einer genau definierten Eingangs- oder Referenzgröße mit dem Messergebnis des zu prüfenden Messsystems verglichen. Dabei muss die Referenzgröße eine deutlich höhere Genauigkeit aufweisen, als das zu prüfende Messgerät.

Im Falle einer Auswuchtmaschine bedeutet Kalibrieren das Anlernen der Maschine an die physikalische Messgröße der "Unwucht", die sich auf eine bekannte Masse mit einem bekannten Radius eines Referenzrotors bezieht.

Die konventionelle Art der Erst-Kalibrierung und spätere Kalibrierkontrollen von Auswuchtmaschinen geschieht nach dem Stand der Technik mittels sogenannter

Meisterrotoren und Kalibriergewichten (Gasch et al., 2014, Rotordynamik, Springer Verlag; Schneider et al., 2007, Auswuchttechnik, Springer-Verlag). Meisterrotoren sind präzise gefertigte rotationssymmetrische Bauteile, die entweder nach einer spezifischen Norm (z.B. ISO 21940-21 oder SAE ARP4162) oder nach der Vorgabe eines Serienteils gefertigt sind. Vorrichtungen und Verfahren zur automatisierten Unwuchtmessung sind im Stand der Technik generell bekannt. So offenbaren die EP 2 280 264 A1 sowie die vom gleichen Anmelder stammende JP 2011080894 A einen Referenzvibrator, der an einer Unwuchtmessvorrichtung für ein rotierendes Produkt mit einem Rotor im Inneren montiert ist und zur Wiederholbarkeitsprüfung Vibrationen auf die Unwuchtmessvorrichtung ausübt. Die US 2003/005763 A1 beschreibt eine selbstkalibrierende Werkstück-Auswuchtmaschine mit der Fähigkeit, die Unwucht rotierender Teile unter Einsatz einer oder mehrerer automatischer Last- oder Krafteinspritzeinheiten automatisch zu bestimmen und zu korrigieren. Die US 2019/271609 A1 betrifft ein Verfahren zur Kalibrierung einer Auswuchtmaschine in einem Ausgleichlauf, bei dem ein auszugleichender Rotor in Lagern drehbar gelagert und mittels einer Antriebseinheit beschleunigt wird, wobei zumindest ein Messaufnehmer eine Ausgangsschwingung des Rotors vor einem Unwuchtausgleich bestimmt und diesen an eine Auswertevorrichtung übermittelt, die den Messwert als Schwingvektor speichert.

Wichtig für die Kalibrierung einer Auswuchtmaschine ist ein definierter Anschraubradius am Meisterrotor für die Aufnahme der Kalibriergewichte. Bei den Kalibriergewichten müssen die Masse und die Schwerpunktlage selbiger bekannt sein. Die Kalibrierung der Auswuchtmaschine erfolgt somit über den bekannten Kalibrierradius als Abstand des Schwerpunkts des angeschraubten Kalibriergewichts zur Rotationsachse des Meisterrotors. Das Produkt aus Kalibrierradius (Einheit Millimeter bzw. [mm]) und die Masse des Kalibriergewichts (Einheit Gramm bzw. [g]) bilden die Kalibrierunwucht (Einheit Gramm x Millimeter bzw.[ g x mm]).

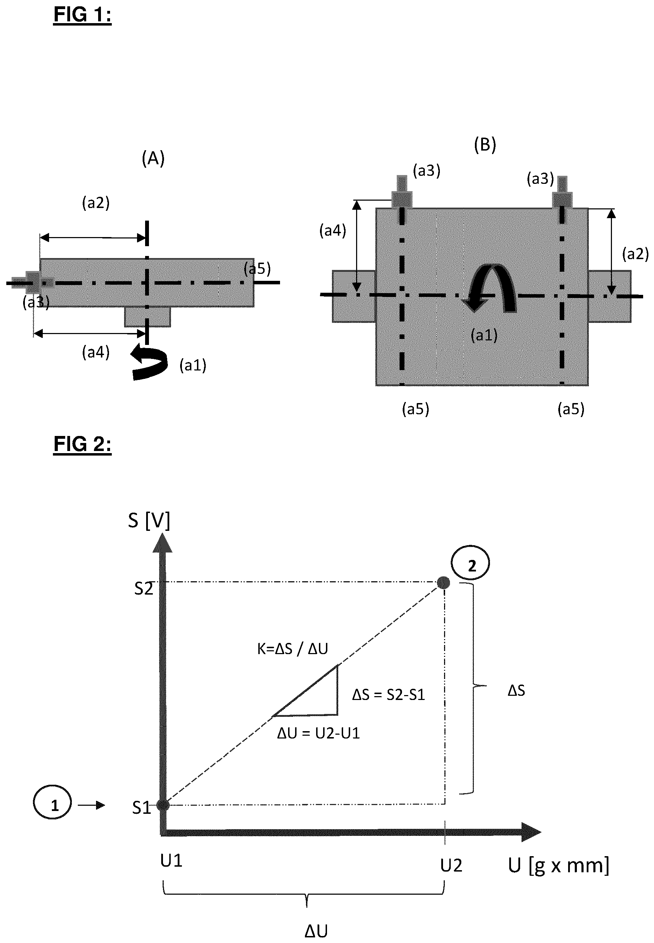

Generell wird zwischen Ein-Ebenen und Zwei-Ebenen Auswuchtmaschinen unterschieden. Fig. 1 zeigt schematisch die Bauformen eines 1-Ebenen (A) und eines 2-Ebenen (B) Meisterrotors des Standes der Technik. Danach verfügt jeder Rotor je nach Ausführung über eine vertikale bzw. eine horizontale Rotationsachse (a1) und einen Anschraubradius (a2) für das Kalibriergewicht (a3). Der Kalibrierradius (a4) ergibt sich über den Abstand des Massenschwerpunkts des Kalibriergewichts zur Rotationsachse. In axialer Richtung werden entsprechend der Anzahl ein bzw. zwei Kalibrierebenen (a5) angegeben.

Ein Kalibriervorgang für eine Ein-Ebenen-Auswuchtmaschine erfolgt nach den Stand der Technik in mindestens zwei Schritten wie folgt::
1. Durchführung eines Nulllaufs mit dem Meisterrotor (ohne Kalibriergewicht, es wirkt nur die Restunwucht des Rotors auf das Messystem)
2. Durchführung eines Kalibrierlaufs mit dem Meisterrotor und angesetztem Kalibriergewicht in der festgelegten (ersten) Auswuchtebene

Beim Kalibriervorgang einer Zwei-Ebenen-Auswuchtmaschine erfolgt ein dritter Schritt, der ggf. auch zusammen mit dem zweiten Schritt in einem Vorgang durchgeführt werden kann:
3. Durchführung eines Kalibrierlaufs mit dem Meisterrotor und angesetztem Kalibriergewicht in der zweiten Auswuchtebene.

Physikalisch gesehen, erfolgt das Anlernen der Auswuchtmaschine über Messungen der Amplitude der Unwucht im Verhältnis zu einer gemessenen elektrischen Spannung, die von einem Unwucht-Sensor (z.B. Kraft- oder Schwingungssensor) aufgrund von auftretenden Unwucht bedingten Schwingungen generiert wird. Dies wird durch Fig. 2 verdeutlicht: Die Erfassung der Unwucht-Schwingung erfolgt dabei mittels eines Rotors mit definierter Unwucht (Meisterrotor). Die Zuweisung der gemessenen Sensorspannung (y-Achse) zu einer kalibrierten definierten Unwucht (x-Achse) erfolgt durch lineare Interpolation. Der Kalibrierfaktor K ergibt sich als Verhältnis Δ S / Δ U. Während eines Kalibriervorgangs wird zudem die Winkelposition der gesetzten Kalibriermasse von der Messelektronik erfasst, indem der gemessene Zeitpunkt des Nulldurchgangs der harmonischen Schwingungsantwort (Kraftsignal) mit dem Nullsignal des Rotors abgeglichen wird.

Aus dem Gesagten geht hervor, dass für jeden Kalibrierablauf nach dem Stand der Technik zum einen das Equipment in Form eines hochpräzise gefertigten Meisterrotors und eines abgewogenen Kalibriergewichts erforderlich ist. Zum anderen muss für die Durchführung der Kalibrierung zusätzlich ein Umrüsten der Maschine auf den Meisterrotor vorgenommen und somit die laufende Serienfertigung eines Auswuchtprozesses unterbrochen werden. Nach Durchführung eines sogenannten Nulllaufs muss ein händisches Anschrauben der Kalibriergewichte in der jeweiligen Ebene erfolgen. In diesem Sinne besteht sowohl beim Einrichten, als auch bei der Durchführung dieser händischen Kalibrierung ein Bedienereinfluss, welcher gegebenenfalls fehlerbehaftet sein kann.

Da Auswuchtvorgänge im industriellen Maßstab nach dem beschriebenen Stand der Technik in großer Anzahl routinemäßig und möglichst überall durchgeführt werden müssen, machen sich häufige, längere, aufwendigere und ggf. fehlerbehaftete Kalibriervorgänge in der Summe negativ auf die Wirtschaftlichkeit und Sicherheit der zugrundeliegenden Prozessabläufe bemerkbar.

Es bestand somit die Aufgabe, die Kalibrierung von Auswuchtmaschinen zu vereinfachen insbesondere zu automatisieren, umso schneller und präziser unter Minimierung des Einsatzes von Bedienungspersonal und damit ggf. verbundener Fehlerquellen routinemäßige Auswuchtungen von rotierenden Maschineteilen aller Art zu ermöglichen.

### ZUSAMMENFASSUNG DER ERFINDUNG

Diese Aufgabe wurde durch eine neuartige automatsche Kalibriervorrichtung als integraler Bestandteil von neuen oder bekannten, statischen oder dynamischen Auswuchtmaschinen, sowie durch ein vereinfachtes Verfahren zur automatischen Kalibrierung dieser Auswuchtmaschinen, wie nachfolgend und in den Ansprüchen näher beschrieben und charakterisiert, gelöst.

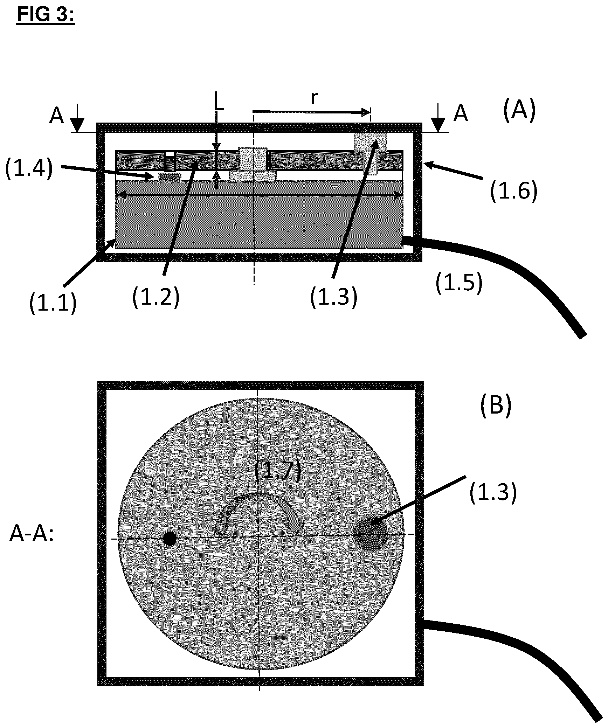

Gegenstand der Erfindung ist somit eine neuartige Kalibrierungsvorrichtung (1), wie gemäß Fig. 3 beispielhaft gezeigt, welche als integraler Bestandteil einer an sich bekannten Auswuchtmaschine vorgesehen ist und diese automatisch ohne die üblichen Maßnahmen kalibrieren kann. Die Kalibrierungsvorrichtung ist dabei ein Bauteil, vorzugsweise in einem Gehäuse (1.6), in Form eines elektromotorisch angetriebenen, mechanischen Unwuchterregers (1) der einen durch eine elektronische Regeleinheit (1.5) regelbaren Elektroantrieb (1.1) und eine von diesem angetriebene rotierende Kalibrierscheibe (1.2), die als Unwuchtscheibe fungiert, umfasst.

Diese rotierende Scheibe (1.2) weist daher auf einem wählbaren aber definierten Radius ein oder mehrere definierte Kalibriergewichte (1.3), vorzugsweise ein einziges Kalibriergewicht auf. Dadurch ergibt sich ein definierter Unwucht-Betrag [g x mm].

Die erfindungsgemäße Kalibriervorrichtung besitzt ferner einen internen Impulsgeber (1.4) zur berührungslosen Drehzahlerfassung der rotierenden Unwuchtscheibe (1.2), der so angebracht ist, dass zwischen Impulsgeber und dem mindestens einen Kalibriergewicht (1.3) ein definierter Kalibrier-Winkel (1.7) gebildet wird. Der Kalibrierwinkel, welcher den Winkel zwischen Impulsgeberposition und Befestigungspunkt des Kalibriergewichtes auf der rotierenden Scheibe (1.2) um die Drehachse bildet, ist anfänglich frei wählbar und wird letztendlich durch die Einbaulage in der Auswuchtmaschine bestimmt.

Die erfindungsgemäße Kalibriervorrichtung (1) besitzt erfindungsgemäß als Bauteil eine möglichst flache scheibenförmige kompakte Geometrie und gewährleistet so eine weitgehend momentenfreie oder zumindest momentenarme Krafterregung in der Auswuchtmaschine.

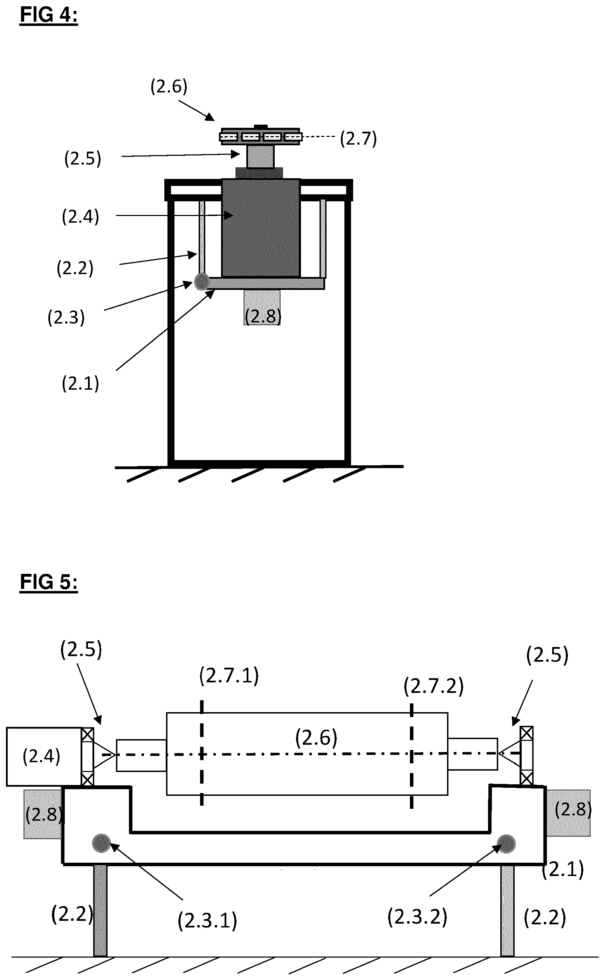

Gegenstand der Erfindung ist darüber hinaus eine manuell oder automatisch betriebene Auswuchtmaschine, wie in Fig. 4 und 5 exemplarisch gezeigt, zum statischen oder dynamischen Auswuchten von rotationssymmetrischen Maschinenteilen oder Rotoren, welche im Wesentlichen umfasst:
(i) eine translatorisch und / oder rotatorisch bewegliche Schwingungsgrundplatte (2.1),
(ii) elastische Federelemente (2.2),
(iii) mindestens einen Schwingungssensor (2.3), welcher die Bewegungen der Schwingungsgrundplatte (2.1) registriert, wobei dieser in einer Ausführungsform der Erfindung vorzugsweise an der Schwingungsgrundplatte (2.1) befestigt ist, und seine Messrichtung der Bewegungsrichtung der Schwingungsgrundplatte (2.1) entspricht
(iv) einem elektromotorischen Antrieb mit Drehzahlgeber (2.4),
(v) eine vertikale oder horizontale Lagerung (2.5) zur Aufnahme eines auszuwuchtenden rotations-symmetrischen Maschinenteils oder Rotors (2.6),
(vi) eine Mess- /Steuer- / und elektronische Regeleinheit (2.9), und
(vii) mindestens eine erfindungsgemäße, oben beschriebene Kalibriervorrichtung (2.8) (1), welche so im Bereich der Schwingungsgrundplatte (2.1) angebracht und ausgerichtet ist, dass mindestens eine Vektorkomponente der zentrifugal umlaufenden harmonischen

Erregerkraft der rotierenden Kalibrierscheibe (1.2) der Kalibriervorrichtung (1) in die Bewegungsrichtung der Schwingungsgrundplatte (2.1) zeigt, wie z.B. in den Fig. 4 und 5 gezeigt.

In einer Ausführungsform der Erfindung (z.B. Fig. 4) ist die erfindungsgemäße Auswuchtmaschine eine Ein-Ebenen-Auswuchtmaschine, welche zum Auswuchten von rotationssymmetrischen Maschinenteilen oder Rotoren in einer einzigen definierten Auswucht-Ebene (2.7) vorgesehen ist, und eine erfindungsgemäße Kalibriervorrichtung (2.8)(1) aufweist.

In einer anderen Ausführungsform der Erfindung (z.B. Fig. 5) wird die erfindungsgemäße Auswuchtmaschine als Zwei-Ebenen-Auswuchtmaschine betrieben und weist mindestens zwei erfindungsgemäße Kalibriervorrichtungen (2.8)(1) auf. Eine solche Auswuchtmaschine ist für das Auswuchten von rotationssymmetrischen Maschinenteilen in zwei definierten Auswucht-Ebenen (2.7) vorgesehen.

Gegenstand der Erfindung ist ferner ein automatisches Kalibrierverfahren für statische und dynamische Auswuchtmaschinen unter Verwendung der oben und unten beschriebenen erfindungsgemäßen automatischen Kalibriervorrichtung (1)(2.8) als integraler Bestandteil der Auswuchtmaschine.

Dadurch ist es im Gegensatz zum Stand der Technik möglich, nur einen einzigen Kalibrierlauf für jede vorgesehene Auswucht-Ebene des auszuwuchtenden Maschinenteils oder Rotors vorzunehmen, ohne dabei Kalibriergewichte in Abhängigkeit von der Position der Drehachse anzusetzen zu müssen. Für eine Ein-Ebenen Auswuchtmaschine ist also nur ein einziger Kalibrierlauf notwendig, und für eine Zwei-Ebenen Auswuchtmaschine sind lediglich zwei Kalibrierläufe vorzunehmen.

Sofern eine erstmalige Grundkalibrierung der Auswuchtmaschine bereits erfolgt ist, ist es weiterhin möglich, einen beliebigen routinemäßigen Kalibrierlauf ohne Einlegung eines Meisterrotors in die Auswuchtmaschine und ohne manuelle Befestigung von zusätzlichen Kalibriergewichten durchzuführen.

Ferner kann das erfindungsgemäße Kalibrierverfahren wegen seiner Einfachheit und schnellen Durchführbarkeit vor jedem Auswuchtvorgang, in periodischen Abständen oder im Zuge von gewünschten oder notwendigen Kalibrierungskontrollen eingesetzt werden.

Erfindungsgemäß kann das beschriebene automatische Kalibrierverfahren auch im Zuge einer, bzw. im Anschluss an eine Grundkalibrierung, durchgeführt werden, z. B. bei der erstmaligen Inbetriebnahme der Auswuchtmaschine oder bei einer späteren Modifikation, Instandsetzung oder Wartung,.

Unter Grundkalibrierung wird erfindungsgemäß der einmalige Anlernvorgang der Kalibriervorrichtung der Auswuchtmaschine verstanden. Ein Beispiel einer Grundkalibrierung mit Hilfe der erfindungsgemäßen Kalibriervorrichtung ist im Abschnitt "Einzelheiten der Erfindung" beschrieben.

Die hier vorgestellten erfindungsgemäßen Vorrichtungen und Verfahren weisen zusammengefasst somit folgende Vorteile auf:
- Die erfindungsgemäße Kalibriervorrichtung ermöglicht eine automatische Kalibrierung und automatische Kalibrierkontrolle von 1-Ebenen und 2-Ebenen Auswuchtmaschinen unabhängig von der Ausrichtung der Drehachse (horizontal oder vertikal) und Art des Unwucht-Messsystems (wegmessend oder kraftmessend).
- Die automatische Kalibrierung und automatische-Kalibrierkontrolle der Auswuchtmaschine kann während des Betriebs der Anlage erfolgen. Es ist keine Unterbrechung der Produktion, kein Umrüsten der Anlage und kein Einlegen von Meisterrotoren und Anschrauben von Kalibriergewichten erforderlich.
- Die erfindungsgemäße Kalibriervorrichtung ist im Rahmen der technischen Möglichkeiten beliebig skalierbar in Form von Unwucht-Kapazität und Kalibrierdrehzahl.
- Die erfindungsgemäße Kalibriervorrichtung und das automatische Kalibrierverfahren lassen sich sowohl an bestehenden Auswuchtmaschinen nachrüsten, als auch an neuen Auswuchtmaschinen einsetzen.
- Eine automatische Kalibrierkontrolle der Auswuchtmaschine ist in zyklischen Abständen möglich. Damit lassen sich eventuelle wuchttechnisch-relevante Veränderungen an der Maschine erkennen und frühzeitige Maßnahmen, z.B. Einleitung einer Wartung, vornehmen.
- Durch den automatischen Kalibrierablauf entfallen sämtliche Bedienereinflüsse bei der Kalibrierung. Dadurch wird die Prozess- und Produktionssicherheit erhöht.
- Der einfache und robuste mechanische Aufbau der Kalibriervorrichtung ermöglicht eine hohe Betriebssicherheit und Zuverlässigkeit bei der Kalibrierung.

Der hier beschriebene Aufbau der Vorrichtungen und das Verfahren können auch zur Kalibrierung und Überprüfung von High-Speed Auswuchtanlagen (HS-Anlagen) für elastische Rotoren eingesetzt werden. Weitergehend ist es denkbar, die erfindungsgemäße Kalibriervorrichtung als mobile Ausführung für das Betriebsauswuchten von Großanlagen, z.B. Großventilatoren, Pumpenanlagen, etc. einzusetzen.

### KURZE BESCHREIBUNG DER VERWENDETEN BEZUGSGRÖSSEN:

### Bauformen (schematisch): 1-Ebenen / 2-Ebenen Meisterrotor

| | |
|---|---|
| (a1) | vertikale / horizontale Drehachse |
| (a2) | Radius des Rotors |
| (a3) | Kalibriergewicht |
| (a4) | Kalibrierradius (Abstand Kalibriermasse - Drehachse) |
| (a5) | Kalibrierebene |
| (1) | Automatische Kalibriervorrichtung |
| (1.1) | Scheibenläufer / elektr. Antrieb |
| (1.2) | Unwuchtscheibe-/-rotor, angetrieben von (1.1) |
| (1.3) | Kalibriergewicht, angebracht auf (1.2) |
| (1.4) | Unwucht-Erreger: Impulsgeber und Magnet angeordnet zwischen (1.1) und (1.2) |
| (1.5) | Elektronische Regeleinheit |
| (1.6) | Gehäuse |
| (1.7) | Kalibrierwinkel, gebildet zwischen (1.4) und Position von (1.3) |
| (2) | Auswuchtmaschine |
| (2.1) | schwingfähige Grundplatte |
| (2.2) | elastische Federelemente |
| (2.3) | Unwucht-Schwingungssensor (kraft- oder wegmessend) |
| (2.3.1) | Sensor 1 |
| (2.3.2) | Sensor 2 |
| (2.4) | elektr. Antrieb |
| (2.5) | horizontale/vertikale Lagerung / Drehachse / Welle |
| (2.6) | Rotor / auszuwuchtendes scheibenförmiges Bauteil / Meisterrotor |
| (2.7) | Auswuchtebene(n) senkrecht zu (2.5) |
| (2.8) | Kalibriervorrichtung (1) |
| (2.9) | Mess- /Steuer- / und elektr. Regeleinheit |
| (2.10) | Signalleitung Drehzahl (2.4) |
| (2.11) | Signalleitung Motorsteuerung (2.4) |
| (2.12) | Signalleitung Unwucht-Schwingungssensor (2.3) |
| (2.13) | Signalleitung Kalibriervorrichtung (2.8) |

### KURZE BESCHREIBUNG DER ABBILDUNGEN:

Fig. 1: zeigt eine schematische Darstellung von zwei typischen Meisterteilen gemäß des Standes der Technik:: (A) 1- Ebenen Meisterrotor mit vertikaler Drehachse und
   (B) 2- Ebenen-Meisterrotor mit horizontaler Drehachse
Fig. 2: zeigt den graphischen Zusammenhang zwischen Unwucht U [g x mm] und Sensorspannung S [V] beim Anlernen einer Auswuchtmaschine des Standes der Technik.
Fig. 3: zeigt eine Prinzip-Darstellung einer erfindungsgemäßen automatischen Kalibriervorrichtung in Seitensicht (A) und Draufsicht (B): Die Vorrichtung umfasst in einem Gehäuse (1.6) einen elektrischen Antrieb (1.1), eine Kalibrierscheibe (1.2) mit Unwucht-Gewicht (1.3) und einen Impulsgeber (1.4) zur Drehzahl- und Winkelerfassung. Der frei wählbare Kalibrierwinkel wird durch α dargestellt.
Fig. 4: zeigt den prinzipiellen Aufbau eines Messsystems für eine 1-Ebenen Auswuchtmaschine mit vertikal angeordneter Rotorwelle und einer erfindungsgemäßen automatischen Kalibriervorrichtung (2.8).
Fig. 5: zeigt den prinzipiellen Aufbau eines Messsystems für eine 2-Ebenen Auswuchtmaschine mit horizontal angeordneter Rotorwelle und zwei erfindungsgemäßen automatischen Kalibriervorrichtungen (2.8).
Fig. 6: zeigt im Prinzip den Messsystem-Aufbau einer Auswuchtmaschine gemäß Abbildung 4, hier jedoch erweitert durch die Mess-/Regel- und Steuereinheit (2.9). Diese ist durch entsprechende Signalleitungen (2.10 - 2.13) mit der Auswuchtmaschine verbunden.
Fig. 7: zeigt den graphischen Zusammenhang zwischen Unwucht U [g x mm] und Sensorspannung S [V] beim Anlernen einer Auswuchtmaschine mittels einer erfindungsgemäßen automatischen Kalibriervorrichtung in Analogie zu Abbildung 2. Näheres ist im Beispiel beschrieben.

### EINZELHEITEN DER ERFINDUNG

Die erfindungsgemäße Kalibriervorrichtung (1)(2.8) stellt einen elektromotorisch angetriebenen, mechanischen Unwucht-Erreger dar, der mit einer zugehörigen Steuer- und Regeleinheit (1.5) versehen ist, welche die Ansteuerung der Kalibriervorrichtung und die Schnittstelle zum übergeordneten Messrechner übernimmt.

Die erfindungsgemäße Kalibriervorrichtung (siehe Fig. 3) verfügt über ein kompaktes Design in Form eines Elektroantriebs in flacher Bauweise, z.B. in Scheibenläuferausführung (1.1) und einer direkt aufgesetzten Unwucht-Scheibe (1.2), welche wiederum auf einem wählbaren definierten Radius [r] ein definiertes Kalibriergewicht der Masse m (1.3) aufnimmt. Wie bereits erwähnt, ist der geringe Formfaktor der als Unwucht-Erreger arbeitenden erfindungsgemäßen Kalibriervorrichtung, d.h. seine flache Bauweise, wichtig, weil nur eine quasi-scheibenförmige Geometrie eine möglichst momentenfreie Krafterregung in der Auswuchtmaschine erreichen kann. Das Verhältnis von Scheibendurchmesser D zur Länge L in axialer Richtung sollte daher größer als D/L >5, vorzugsweise > 8 sein.

Ebenso sollte die Unwuchtscheibe einen ausreichend hohen Planlauf zur Rotationsachse aufweisen (Zielwert: < 0.04 mm, vorzugsweise < 0.02 mm).

Die Vorrichtung verfügt weiterhin über einen internen Impulsgeber zur Drehzahlerfassung (1.4). Der Winkel zwischen dem Impulsgeber und der Position der Kalibriermasse bzw. Unwucht-Masse (1.2) bildet bei der späteren Kalibrierung den Kalibrierwinkel. (1.7). Er kann Werte zwischen 0 und 360° annehmen und wird konstruktiv einmalig festgelegt. In Fig 3 (B) ist eine Ausführungsform für einen Winkelversatz von 180° dargestellt. Es können jedoch auch beliebige andere Winkel gewählt werden, also z.B. 45°, 60°, 90°, 120° oder 180°.

Die elektronische Regeleinheit (1.5) der erfindungsgemäßen automatischen Kalibriervorrichtung ist mit einem Motordrehzahlregler und einem, z.B. pulsweitengesteuerten Motortreiber ausgestattet, so dass eine Solldrehzahl des Antriebs mit einer definierten hohen Drehzahlstabilität, vorzugsweise kleiner +/- 1 [1/min], einstellbar ist. Die elektronische Regeleinheit kann dabei in dem Gehäuse (1.6) der Kalibriervorrichtung aber auch getrennt außerhalb davon untergebracht sein. Diese Drehzahlkonstanz ist insbesondere relevant, um stationäre und reproduzierbare Bedingungen während des Kalibrierlaufs zu ermöglichen.

Die Kalibriervorrichtung (1), wie beschrieben und in Fig. 3 skizziert, wird nunmehr in eine Auswuchtmaschine mit einer schwingfähigen Grundplatte (2.1), welche durch elastische Federelemente (2.2) mit dem stationären Teil der Maschine verbunden ist, eingebaut.

Dies kann eine Auswuchtmaschine des Standes der Technik sein.

Dabei ist darauf zu achten , dass die Kalibrierungsvorrichtung so im Bereich der Schwingungsgrundplatte (2.1) angebracht und ausgerichtet ist, dass mindestens ein Vektor der zentrifugal umlaufenden Erregerkraft der rotierenden Kalibrierscheibe (1.2) der Kalibriervorrichtung (1)(2.8) in die Bewegungsrichtung der Schwingungsgrundplatte (2.1) der Auswuchtmaschine zeigt.

Bei einer Ein-Ebenen-Auswuchtmaschine erfolgt der Einbau zweckmäßigerweise in Richtung, beispielsweise in Verlängerung der Drehachse des auszuwuchtenden Rotors. Die erfindungsgemäße Kalibriervorrichtung (2.8) (1) ist hier in Bezug auf die auf translatorische Bewegungen beschränkte Schwingungsgrundplatte (2.1) positioniert. Fig. 4 zeigt einen möglichen Aufbau einer solchen Ein-Ebenen Auswuchtmaschine mit eine erfindungsgemäßen Kalibriervorrichtung (2.8), welche unterhalb des Antriebs (2,4) in Verlängerung der hier vertikal angeordneten Lagerung (2.5) an der Grundplatte (2.1) angebracht ist. Die durch Unwucht ausgelösten Schwingungen der Grundplatte (2.1) werden durch einen ebenfalls in diesem Bereich angebrachten Unwucht-Schwingungssensor (2.3) registriert. Wie bereits gesagt, erfolgt das Kalibrierverfahren mit der automatischen Kalibriervorrichtung bei der 1-Ebenen Auswuchtmaschine mit nur einem einzigen Kalibrierlauf.

Fig. 5 zeigt ein mögliches Arrangement von zwei der erfindungsgemäßen Kalibriervorrichtungen (2.8) bei einer Zwei-Ebenen Auswuchtmaschine, wobei für jede Ebene (2.7) eine erfindungsgemäße Kalibriervorrichtung benötigt wird. In der gezeigten Ausführungsform ist ein langer Rotor mit kurzem radialen Durchmesse horizontal gelagert. Die beiden Kalibriervorrichtungen (2.8) sind versetzt in Richtung der horizontalen Lagerung (2.5) angebracht und sind mit der zu translatorischen und rotatorischen Bewegungen befähigten Schwingungsgrundplatte (2.1) verbunden. Letztere weist mindestens zwei Schwingungssensoren (2.3.1)(2.3.2) an versetzten Positionen auf, um die durch Unwucht erzeugten Schwingungsereignisse beider Ebenen (statischer Anteil und Momenten-Anteil) zu messen.

Das erfindungsgemäße Kalibrierverfahren beruht im Wesentlichen darauf, dass eine für die jeweilige Auswuchtmaschine und ihre vorgesehene Nutzung geeignete Kalibriervorrichtung (2.8)(1) mit einem vorab definierten Kalibrierunwucht-Betrag [g x mm] und einen vorab definierten Kalibrierwinkel (1.7) der Unwuchtscheibe (1.2)zur Verfügung gestellt wird. Bei eingeschalteter Kalibriervorrichtung kann nun bei schwingender Grundplatte (2.1) ein Spannungssignal am Schwingungssensor (2.3)(2.3.1)(2.3.2) gemessen werden, welches wegen des mathematisch linearen Zusammenhangs zwischen erzeugter Unwucht-Amplitude und gemessener Spannung, einer bestimmten Kalibrierunwucht der Auswuchtmaschine entspricht. Dieser Wert wird durch die elektronische Mess- und Regeleinheit (2.9) erfasst und ausgewertet wird, wobei die so automatisch ermittelte Kalibrierunwucht den nachfolgenden Auswuchtvorgängen als Referenz zugrunde gelegt wird.

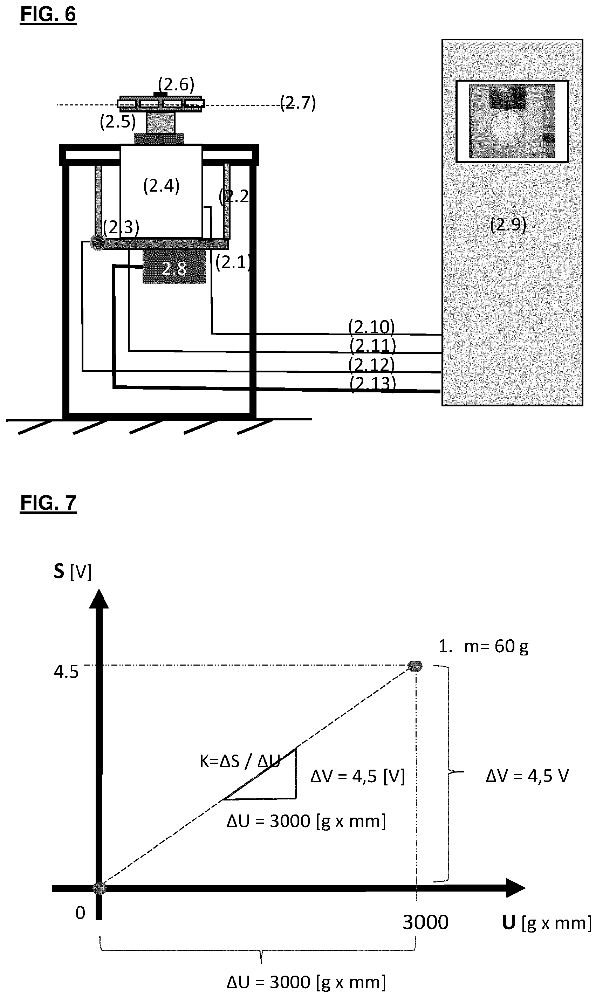

Wegen des linearen Zusammenhangs zwischen Unwucht-Amplitude und Spannungssignal am Unwucht-Sensor (2.3) genügt es, neben der Bedingung, dass die Kennlinie den Nullpunkt schneiden soll, einen einzige Messpunkt zu ermitteln. Fig. 7 zeigt diesen Zusammenhang für ein konkretes, weiter unten näher beschriebenes Beispiel.

Bei eingelegtem, rotierendem Rotor wird das Kalibrierverfahren vorzugsweise so gesteuert, dass die Drehzahl des auszuwuchtenden Rotors während des Kalibrierlaufs mindestens 15-20% unterhalb oder 15-20% oberhalb der Kalibrierdrehzahl der Kalibriervorrichtung (1)(2.8), d.h. der Unwuchtscheibe (1.2) liegt. Das bedeutet, dass sowohl die Kalibriervorrichtung als auch der Rotor sich simultan drehen dürfen. Die Messelektronik filtert während des Kalibriervorgangs die für die Kalibrierung relevanten, drehzahlfrequenten Anteile heraus. Es kommt hierdurch zu keinerlei Beeinflussung des Kalibrierergebnisses. Berücksichtigt werden muss in letzterem Fall, dass eine Umschaltung des Nullimpulses i. d. Messelektronik vom Rotor hin zur Kalibriervorrichtung erfolgen muss, um die korrekten Schwingungssignale für den Kalibriervorgang auswerten zu können.

Auf die Einzelheiten des mechanischen Aufbaus und der Messprinzipien soll an dieser Stelle nicht weiter eingegangen werden. Es sei hier auf einschlägige Fachliteratur verwiesen, wie z.B.: Gasch et al., 2014 Rotordynamik, Springer Verlag; Schneider et al., 2007, Auswuchttechnik, Springer Verlag.

Bei der 2-Ebenen Auswuchtmaschine ist je Wuchtebene eine Kalibriervorrichtung erforderlich. Zur Kalibrierung der Auswuchtmaschine werden die Kalibriervorrichtungen jeweils einmal nacheinander eingeschaltet.

Wie im 1-Ebenen Fall muss während der Kalibrierung kein Meisterteil eingelegt und kein Kalibriergewicht angeschraubt werden. Es genügt, wenn ein Serienteil bzw. Kundenteil in der Auswuchtmaschine eingelegt ist.

Es ist auch möglich, einen beliebigen Kalibrierlauf während des Betriebes der Auswuchtanlage durchzuführen, also ohne die Anlage herunterzufahren und wieder hochzufahren, und sogar auch dann, wenn ein auszuwuchtender Rotor oder ein auszuwuchtendes Maschinenteil bereits in die Auswuchtmaschine eingelegt ist und rotiert.

Wie bereits erwähnt, muss bei der Erstinbetriebnahme der Auswuchtmaschine und bei jeder späteren Modifikation, Wartung oder Instandsetzung eine Grundkalibrierung der Auswuchtmaschine durchgeführt werden, wobei gemäß des klassischen Standardverfahrens zunächst auch ein Meisterrotor und Kalibriergewichte zum Einsatz kommen müssen.

Eine Grundkalibrierung einer Auswuchtmaschine unter Einsatz einer erfindungsgemäßen Kalibriervorrichtung bzw. einer erfindungsgemäßen Auswuchtmaschine umfasst somit prinzipiell folgende Schritte:
(i) einmalige Kalibrierung der Auswuchtmaschine mit einem standardisierten oder zertifizierten Referenz- oder Meisterrotor mit definierter oder normierter Unwucht mittels standardisierter oder zertifizierter Kalibriergewichte,
(ii) Bestimmung / Messung der Unwuchtbeträge und Kalibrierwinkel der erfindungsgemäßen, eingeschalteten automatischen Kalibriervorrichtung (1)(2.8) bei eingelegten Referenz- / Meisterrotor einzeln und nacheinander für jede vorgesehene Auswucht-Ebene (2.7),
(iii) Hinterlegung der in (ii) ermittelten Unwuchtbeträge und Kalibrierwinkel in einem Programm der Mess- /Steuer- / und elektronische Regeleinheit (2.9),
(iv) Durchführung eines Kalibrierlaufs mit der erfindungsgemäßen Kalibriervorrichtung wie prinzipiell für das erfindungsgemäße Kalibrierverfahren beschrieben, und
(v) Kontrolle der Kalibrierung durch Anbringung eines Kalibriergewichtes am Referenz- / Meisterrotor nach vorangegangener Nullung des Messsystems.

Der automatische Kalibriervorgang gilt als erfolgreich durchgeführt, wenn die angezeigten Messwerte von Punkt (v) den erwarteten kalibrierten Messwerten von Punkt (i) entsprechen.

### BEISPIEL:

Durchführung der Kalibrierung einer Ein-Ebenen Auswuchtmaschine für Bremsscheiben Fig. 6 zeigt eine klassische 1-Ebenen Auswuchtmaschine mit vertikaler Drehachse zur Erfassung von statischen Unwuchten. Der Maschinenaufbau wurde bereits anhand Fig. 4 beschrieben. Der Aufbau wird nun um einen Schaltschrank mit der Mess-, Steuer- und Regeleinheiten und einer Visualisierung (2.9) ergänzt, welche den Antrieb der Auswuchtmaschine und die automatische Kalibriervorrichtung (2.8) steuern. Zwischen Auswuchtmaschine und Mess-/Regeleinheit sind Signalleitungen für Drehzahl der Auswuchtmaschine (2.10), Motorsteuerleitung (2.11), Unwucht-Signal (2.12) und die Ansteuerung der automatischen Kalibriervorrichtung (2.13) vorgesehen.

Die Auslegung der automatischen Kalibriervorrichtung orientiert sich an der Auswuchttoleranz des zu messenden Rotors. Sei T die zulässige Auswuchttoleranz des Rotors, so gilt als Größenordnung für die erzeugte Unwucht U der Kalibriervorrichtung eine Größenordnung von: *U =* 10 ... 20 * *T.*

Für eine beispielhaft angenommene Bremsscheibe beträgt die zulässige Auswuchttoleranz T = 300 [g x mm]. In diesem Fall sollte die Unwucht der Kalibriervorrichtung gemäß vorheriger Gleichung zwischen 3000 bis 6000 [g x mm] liegen.

Die Unwucht der Kalibriervorrichtung lässt sich über die folgende Gleichung beschreiben:
*U* = *m* * *r*, wobei m die Massenunwucht der Kalibriervorrichtung (2.8) und r den Abstand (Radius) der Massenunwucht zur Rotationsachse der Kalibriervorrichtung darstellen. Für das Beispiel der Bremsscheibe soll eine Kalibrierunwucht von 3000 [g x mm] angestrebt werden. Wird ein Radius von r = 50 mm zugrunde gelegt bzw. ausgewählt, so muss das Kalibriergewicht (1.3) eine Masse von 60 g besitzen.

Die Kalibierkurve (Fig. 7) für diese Ein-Ebenen Auswuchtmaschine mit automatischer Kalibriervorrichtung ergibt sich mit einem einzigen Kalibrierlauf wie folgt: Der erste Bezugs- oder Messpunkt der linearen Kennlinie ergibt sich direkt im ausgeschalteten Zustand der Kalibriervorrichtung (Nullpunkt). Der zweite Bezugs- oder Messpunkt ergibt sich durch Einschalten der Kalibriervorrichtung, wobei ein definierter Unwucht-Betrag, im vorliegenden Beispiel 3.000 [g x mm], und ein definierter Unwuchtwinkel dem Unwucht-Messsystem aufgeprägt werden. Hieraus ergibt sich eine bestimmte Sensorspannung, die wiederum der zu ermittelnden Kalibrierunwucht zugewiesen wird. Damit ist die Auswuchtmaschine kalibriert und einsatzbereit.

## Patentansprüche

1. Vorrichtung zur automatischen Kalibrierung einer Auswuchtmaschine in Form eines elektromotorisch angetriebenen, mechanischen Unwuchterregers, im Wesentlichen umfassend einen durch eine elektronische Regeleinheit (1.5) regelbaren Elektroantrieb (1.1) und eine von diesem angetriebene um eine Drehachse rotierende Kalibrierscheibe (1.2), welche auf einem definierten Radius mindestens ein definiertes Kalibriergewicht (1.3) aufweist, woraus sich ein definierter Unwucht-Betrag ergibt ,
wobei
(i) die Kalibrierscheibe (1.2) zur berührungslosen Drehzahlerfassung einen internen Impulsgeber (1.4) aufweist, der so auf der Kalibrierscheibe (1.2) angebracht ist, dass zwischen ihm und dem mindestens einen auf der Kalibrierscheibe angebrachten Kalibriergewicht (1.3) ein definierter Kalibrier-Winkel (1.7) gebildet wird, und
(ii) die elektronische Regeleinheit (1.5) mit einem Motordrehzahlregler und einem Motortreiber ausgestattet ist, welche eine Solldrehzahl des Antriebs mit einer definierten Drehzahlstabilität ermöglichen,
**dadurch gekennzeichnet dass**,
(iii) die Vorrichtung eine flache scheibenförmige kompakte Geometrie besitzt, die so gewählt ist, dass das Verhältnis D/L von Durchmesser (D) zu Länge in axialer Richtung (L) der Unwuchtscheibe (1.2) > 5 ist, wodurch eine momentenfreie oder weitgehend momentenfreie Krafterregung in der Auswuchtmaschine ermöglicht wird.

2. Automatische Kalibriervorrichtung nach Anspruch 1, **dadurch gekennzeichnet, dass** das Verhältnis D/L von Durchmesser (D) zu Länge in axialer Richtung (L) der Unwuchtscheibe (1.2) > 8 ist.

3. Automatische Kalibriervorrichtung nach Anspruch 1 oder 2, **dadurch gekennzeichnet, dass** der Planlauf der rotierenden Unwuchtscheibe (1.2) gegenüber der Rotationsebene < 0.04 mm, vorzugsweise < 0.02 mm ist.

4. Automatische Kalibriervorrichtung nach einem der Ansprüche 1 - 3, **dadurch gekennzeichnet, dass** die Solldrehzahl des Antriebs eine Drehzahlstabilität von kleiner +/- 1 1/min aufweist.

5. Automatische Kalibriervorrichtung nach einem der Ansprüche 1 - 4, **dadurch gekennzeichnet, dass** die elektronische Regeleinheit (1.5) innerhalb eines Gehäuses (1.6) der Vorrichtung oder getrennt außerhalb der Vorrichtung untergebracht ist.

6. Automatische oder manuelle, statische oder dynamische Auswuchtmaschine zum Auswuchten von rotationssymmetrischen Maschinenteilen oder Rotoren im Wesentlichen umfassend eine translatorisch und / oder rotatorisch bewegliche Schwingungsgrundplatte (2.1) mit elastischen Federelementen (2.2), einem oder mehreren Schwingungssensoren (2.3)(2.3.1)(2.3.2), welche die translatorischen und/oder rotatorischen Bewegungen der Schwingungsgrundplatte (2.1) registrieren, einem elektromotorischen Antrieb mit Drehzahlgeber (2.4), eine vertikale oder horizontale Lagerung (2.5) zur Aufnahme eines auszuwuchtenden rotations-symmetrischen Maschinenteils oder Rotors( 2.6), sowie eine Mess- /Steuer- / und elektronische Regeleinheit (2.9),
**dadurch gekennzeichnet dass** sie mindestens eine Kalibriervorrichtung (2.8) (1) gemäß einem der Ansprüche 1 - 5 aufweist, welche so im Bereich der Schwingungsgrundplatte (2.1) der Auswuchtmaschine angebracht und ausgerichtet ist, dass mindestens ein Vektor der zentrifugal umlaufenden Erregerkraft der rotierenden Kalibrierscheibe (1.2) der Kalibriervorrichtung (1) in die Bewegungsrichtung der Schwingungsgrundplatte (2.1) zeigt.

7. Ein-Ebenen-Auswuchtmaschine nach Anspruch 6 zum Auswuchten von rotationssymmetrischen Maschinenteilen oder Rotoren in einer definierten Auswucht-Ebene (2.7), **dadurch gekennzeichnet, dass** sie eine entsprechend positionierte Kalibriervorrichtung (2.8) (1) gemäß einem der Ansprüche 1 - 5, eine auf translatorische Bewegungen beschränkte Schwingungsgrundplatte (2.1), und einen Schwingungssensor (2.3) aufweist.

8. Zwei-Ebenen-Auswuchtmaschine nach Anspruch 6 zum Auswuchten von rotationssymmetrischen Maschinenteilen in zwei definierten Auswucht-Ebenen (2.7), **dadurch gekennzeichnet, dass** zwei entsprechend positionierte Kalibriervorrichtungen (2.8) (1) gemäß einem der Ansprüche 1 - 5, eine translatorisch und rotatorisch bewegliche Schwingungsgrundplatte (2.1), an welcher zwei Schwingungssensoren (2.3) an versetzten Positionen angeordnet sind.

9. Automatische Auswuchtmaschine nach einem der Ansprüche 6 - 8, **dadurch gekennzeichnet, dass** der mindestens eine Schwingungssensor (2.3) an der Schwingungsgrundplatte (2.1) befestigt ist, und seine Messrichtung der Bewegungsrichtung der Schwingungsgrundplatte (2.1) entspricht.

10. Verfahren zum automatischen Kalibrieren oder zur automatischen Kalibrierkontrolle einer Auswuchtmaschine, **dadurch gekennzeichnet, dass** man eine Auswuchtmaschine gemäß einem der Ansprüche 6 - 9 einsetzt.

11. Automatisches Kalibrierverfahren nach Anspruch 10, **dadurch gekennzeichnet, dass** für jede vorgesehene Auswucht-Ebene eines auszuwuchtenden Maschinenteils oder Rotors ohne Einsatz von Kalibriergewichten an der Kalibrierscheibe (1.2) der Kalibriervorrichtung (1) (2.8) und unabhängig von der Position-deren Drehachse nur ein einziger Kalibrierlauf durchgeführt wird.

12. Automatisches Kalibrierverfahren nach Anspruch 10 oder 11, **dadurch gekennzeichnet, dass** ein Kalibrierlauf ohne Einlegung eines Meisterrotors und / oder ohne Befestigung von zusätzlichen Kalibriergewichten erfolgt.

13. Automatisches Kalibrierverfahren nach einem der Ansprüche 10 - 12 **dadurch gekennzeichnet, dass** ein Kalibrierlauf während des Betriebes der Auswuchtmaschine bei einem eingelegten und rotierenden, auszuwuchtenden Rotor oder Maschinenteil erfolgt, wobei die Drehzahl des Rotors oder Maschinenteils während des Kalibrierlaufs mindestens 15-20% unterhalb oder oberhalb der Kalibrierdrehzahl der Kalibriervorrichtung (1) (2.8) liegt.

14. Automatisches Kalibrierverfahren nach einem der Ansprüche 10 - 13 **dadurch gekennzeichnet, dass** folgende Schritte durch geführt werden:
(i) Bereitstellung eines definierten Kalibrierunwucht-Betrags [g x mm] und eines definierten Kalibrierwinkels (1.7) bei eingeschalteter Kalibriervorrichtung (1)(2.8),
(ii) Bereitstellung eines Spannungssignals [V] am Schwingungssensor (2.3)(2.3.1)(2.3.2) der schwingfähigen Grundplatte (2.1),
(iii) Erstellung einer Kalibrier-Kennlinie, welche sich aus dem linearen Zusammenhang zwischen erzeugter Unwucht-Amplitude und gemessener Spannung bei einer bestimmten Kalibrierunwucht der Auswuchtmaschine ergibt und durch den Nullpunkt verläuft, und
(iv) Zuordnung des aus der Kalibrier-Kennlinie ermittelten Punktes des bereitgestellten Spannungssignals zu der zugehörigen Kalibrierunwucht und Zugrundelegung dieses Wertes als Referenz für den nachfolgenden Auswuchtvorgang mit Hilfe der Mess- und Regeleinheit (2.9).

15. Automatisches Kalibrierverfahren nach einem der Ansprüche 10 - 14, **dadurch gekennzeichnet, dass** es vor jedem Auswuchtvorgang, in zyklischen Abständen oder im Zuge einer Kalibrierungskontrolle durchgeführt wird.

16. Verfahren zur Grundkalibrierung einer Auswuchtmaschine bei der erstmaligen Inbetriebnahme oder bei einer späteren Modifikation, Instandsetzung oder Wartung, **dadurch gekennzeichnet, dass** im Zuge des Verfahrens oder im Anschluss des Verfahrens ein Verfahren gemäß einem der Ansprüche 10 - 15 durchgeführt wird.

17. Kalibrierungsverfahren nach Anspruch 16, **dadurch gekennzeichnet, dass** es folgende Schritte umfasst:
(i) einmalige Kalibrierung der Auswuchtmaschine mit einem standardisierten oder zertifizierten Referenz- oder Meisterrotor mit definierter oder normierter Unwucht
(ii) Bestimmung / Messung des jeweiligen Kalibrierunwucht- Betrages [g x mm] und des Kalibrierwinkels (1.7) der eingeschalteten automatischen Kalibriervorrichtung (2.8)(1) bei eingelegten Referenz- / Meisterrotor einzeln und nacheinander für jede vorgesehene Auswucht-Ebene (2.7),
(iii) Hinterlegung der Messergebnisse aus (ii) in eine Mess- /Steuer- / und elektronische Regeleinheit (2.9),
(iv) Durchführung eines Kalibrierlaufs mit der erfindungsgemäßen Kalibriervorrichtung (1)(2.8) und
(v) Kontrolle der Kalibrierung durch Anbringung eines Kalibriergewichtes am Referenz-/ Meisterrotor nach vorangegangener Nullung des Messsystems.

## Claims

1. Device for the automatic calibration of a balancing machine in the form of an electric-motor-driven, mechanical unbalance exciter, substantially comprising an electric drive (1.1) controllable by an electronic closed-loop control unit (1.5) and a calibration disk (1.2) driven by said electric drive and rotating about a rotational axis, which disk has at least one defined calibration weight (1.3) on a defined radius, from which a defined unbalance amount results,
(i) the calibration disk (1.2) having an internal pulse generator (1.4) for contactless speed detection, which is mounted on the calibration disk (1.2) in such a way that a defined calibration angle (1.7) is formed between it and the at least one calibration weight (1.3) mounted on the calibration disk, and
(ii) the electronic closed-loop control unit (1.5) being equipped with a motor speed controller and a motor driver, which allow a target speed of the drive with a defined speed stability,
**characterized in that**
(iii) the device has a flat disk-shaped compact geometry which is selected such that the ratio D/L of diameter (D) to length in the axial direction (L) of the unbalance disk (1.2) is > 5, thereby allowing torque-free or largely torque-free force excitation in the balancing machine.

2. Automatic calibration device according to claim 1, **characterized in that** the ratio D/L of diameter (D) to length in the axial direction (L) of the unbalance disk (1.2) is > 8.

3. Automatic calibration device according to claim 1 or 2,
**characterized in that** the axial runout of the rotating unbalance disk (1.2) relative to the plane of rotation is < 0.04 mm, preferably < 0.02 mm.

4. Automatic calibration device according to any of claims 1 - 3,
**characterized in that** the target speed of the drive has a speed stability of less than +/-1 rpm.

5. Automatic calibration device according to any of claims 1 - 4,
**characterized in that** the electronic closed-loop control unit (1.5) is housed within a housing (1.6) of the device or separately outside the device.

6. Automatic or manual, static or dynamic balancing machine for balancing rotationally symmetrical machine parts or rotors, substantially comprising a translationally and/or rotationally movable vibration base plate (2.1) having resilient spring elements (2.2), one or more vibration sensors (2.3)(2.3.1)(2.3.2) which register the translational and/or rotational movements of the vibration base plate (2.1), an electric motor drive having a speed sensor (2.4), a vertical or horizontal bearing (2.5) for receiving a rotationally symmetrical machine part or rotor (2.6) to be balanced, and a measuring/open-loop control/electronic closed-loop control unit (2.9),
**characterized in that** it has at least one calibration device (2.8) (1) according to any of claims 1 - 5, which is mounted and aligned in the region of the vibration base plate (2.1) of the balancing machine such that at least one vector of the centrifugally rotating excitation force of the rotating calibration disk (1.2) of the calibration device (1) points in the direction of movement of the vibration base plate (2.1).

7. Single-plane balancing machine according to claim 6 for balancing rotationally symmetrical machine parts or rotors in a defined balancing plane (2.7),
**characterized in that** it comprises a correspondingly positioned calibration device (2.8) (1) according to any of claims 1 - 5, a vibration base plate (2.1) limited to translational movements, and a vibration sensor (2.3).

8. Two-plane balancing machine according to claim 6 for balancing rotationally symmetrical machine parts in two defined balancing planes (2.7),
**characterized in that** two correspondingly positioned calibration devices (2.8) (1) according to any of claims 1 - 5, a translationally and rotationally movable vibration base plate (2.1), on which two vibration sensors (2.3) are arranged at offset positions.

9. Automatic balancing machine according to any of claims 6 - 8,
**characterized in that** the at least one vibration sensor (2.3) is attached to the vibration base plate (2.1), and its measuring direction corresponds to the direction of movement of the vibration base plate (2.1).

10. Method for automatic calibration or automatic calibration control of a balancing machine, **characterized in that** a balancing machine according to any of claims 6 - 9 is used.

11. Automatic calibration method according to claim 10, **characterized in that** for each intended balancing plane of a machine part or rotor to be balanced, only a single calibration run is carried out without the use of calibration weights on the calibration disk (1.2) of the calibration device (1) (2.8) and regardless of the position of its axis of rotation.

12. Automatic calibration method according to claim 10 or 11,
**characterized in that** a calibration run is carried out without inserting a master rotor and/or without attaching additional calibration weights.

13. Automatic calibration method according to any of claims 10 - 12
**characterized in that** a calibration run is carried out during operation of the balancing machine with an inserted and rotating rotor or machine part to be balanced, the speed of the rotor or machine part during the calibration run being at least 15-20% below or above the calibration speed of the calibration device (1) (2.8).

14. Automatic calibration method according to any of claims 10 - 13
**characterized in that** the following steps are carried out:
(i) providing a defined calibration unbalance amount [g x mm] and a defined calibration angle (1.7) with the calibration device (1)(2.8) switched on,
(ii) providing a voltage signal [V] to the vibration sensor (2.3)(2.3.1)(2.3.2) of the vibrating base plate (2.1),
(iii) creating a calibration characteristic curve, which results from the linear relationship between the generated unbalance amplitude and the measured voltage at a specific calibration unbalance of the balancing machine and passes through the zero point, and
(iv) assigning the point of the provided voltage signal determined from the calibration characteristic curve to the corresponding calibration unbalance and using this value as a reference for the subsequent balancing process using the measuring and closed-loop control unit (2.9).

15. Automatic calibration method according to any of claims 10 - 14,
**characterized in that** it is carried out before each balancing process, at cyclical intervals or as part of a calibration check.

16. Method for the basic calibration of a balancing machine during initial commissioning or during subsequent modification, repair or maintenance,
**characterized in that** in the course of the method or following the method, a method according to any of claims 10 to 15 is carried out.

17. Calibration method according to claim 16, **characterized in that** it comprises the following steps:
(i) one-time calibration of the balancing machine with a standardized or certified reference or master rotor with defined or standardized unbalance
(ii) determining/measuring the particular calibration unbalance amount [g x mm] and the calibration angle (1.7) of the switched-on automatic calibration device (2.8)(1) with the reference/master rotor inserted individually and successively for each intended balancing plane (2.7),
(iii) storing the measurement results from (ii) in a measuring/open-loop control/electronic closed-loop control unit (2.9),
(iv) carrying out a calibration run with the calibration device (1)(2.8) according to the invention and
(v) checking the calibration by attaching a calibration weight to the reference/master rotor after zeroing the measuring system.

## Revendications

1. Dispositif pour le calibrage automatique d'une machine d'équilibrage sous la forme d'un excitateur mécanique à balourd entraîné par un moteur électrique, comprenant sensiblement un entraînement électrique (1.1) pouvant être régulé par une unité de régulation électronique (1.5) et un disque de calibrage (1.2) entraîné par celui-ci et tournant autour d'un axe de rotation, lequel disque présente sur un rayon défini au moins un poids de calibrage (1.3) défini, d'où résulte une valeur de balourd définie,
dans lequel
(i) le disque de calibrage (1.2) présente, pour la détection sans contact de la vitesse de rotation, un générateur d'impulsions (1.4) interne qui est monté sur le disque de calibrage (1.2) de sorte qu'un angle de calibrage (1.7) défini est formé entre lui et l'au moins un poids de calibrage (1.3) monté sur le disque de calibrage, et
(ii) l'unité de régulation électronique (1.5) est équipée d'un régulateur de vitesse de rotation de moteur et d'un pilote de moteur qui permettent d'obtenir une vitesse de rotation de consigne de l'entraînement avec une stabilité de vitesse de rotation définie,
**caractérisé en ce que**
(iii) le dispositif possède une géométrie compacte en forme de disque plat qui est choisie de sorte que le rapport D/L du diamètre (D) à la longueur dans la direction axiale (L) du disque à balourd (1.2) est > 5, moyennant quoi une excitation de force sans couple ou pratiquement sans couple dans la machine d'équilibrage est permise.

2. Dispositif de calibrage automatique selon la revendication 1,
**caractérisé en ce que** le rapport D/L entre le diamètre (D) et la longueur dans la direction axiale (L) du disque à balourd (1.2) est > 8.

3. Dispositif de calibrage automatique selon la revendication 1 ou 2,
**caractérisé en ce que** la planéité du disque à balourd (1.2) rotatif par rapport au plan de rotation est < 0,04 mm, de préférence < 0,02 mm.

4. Dispositif de calibrage automatique selon l'une des revendications 1 à 3,
**caractérisé en ce que** la vitesse de rotation de consigne de l'entraînement présente une stabilité de vitesse de rotation inférieure à +/-1 1/min.

5. Dispositif de calibrage automatique selon l'une des revendications 1 à 4,
**caractérisé en ce que** l'unité de régulation électronique (1.5) est logée à l'intérieur d'un boîtier (1.6) du dispositif ou séparément à l'extérieur du dispositif.

6. Machine d'équilibrage automatique ou manuelle, statique ou dynamique, pour l'équilibrage de pièces de machine ou de rotors à symétrie de rotation, comprenant sensiblement une plaque de base oscillante (2.1) mobile en translation et/ou en rotation et comportant des éléments élastiques (2.2), un ou plusieurs capteurs d'oscillations (2.3)(2.3.1)(2.3.2) qui enregistrent les mouvements de translation et/ou de rotation de la plaque de base oscillante (2.1), un entraînement à moteur électrique comportant un capteur de vitesse de rotation (2.4), un palier vertical ou horizontal (2.5) destiné à recevoir une pièce de machine ou un rotor (2.6) à symétrie de rotation à équilibrer, ainsi qu'une unité de mesure/de commande/et de régulation électronique (2.9),
**caractérisée en ce qu'**elle présente au moins un dispositif de calibrage (2.8) (1) selon l'une des revendications 1 à 5 qui est monté et orienté dans la zone de la plaque de base oscillante (2.1) de la machine d'équilibrage de sorte qu'au moins un vecteur de la force d'excitation tournant de manière centrifuge du disque de calibrage (1.2) rotatif du dispositif de calibrage (1) pointe dans la direction de déplacement de la plaque de base oscillante (2.1).

7. Machine d'équilibrage à un seul plan selon la revendication 6 pour l'équilibrage de pièces de machine ou de rotors à symétrie de rotation dans un plan d'équilibrage (2.7) défini, **caractérisée en ce qu'**elle présente un dispositif de calibrage (2.8) (1) selon l'une des revendications 1 à 5 positionné de manière correspondante, une plaque de base oscillante (2.1) limitée à des mouvements de translation, et un capteur d'oscillations (2.3).

8. Machine d'équilibrage à deux plans selon la revendication 6 pour l'équilibrage de pièces de machine à symétrie de rotation dans deux plans d'équilibrage (2.7) définis, **caractérisée en ce que** deux dispositifs de calibrage (2.8) (1) selon l'une des revendications 1 à 5 positionnés de manière correspondante, une plaque de base oscillante (2.1) mobile en translation et en rotation, sur laquelle sont disposés deux capteurs d'oscillations (2.3) à des positions décalées.

9. Machine d'équilibrage automatique selon l'une des revendications 6 à 8,
**caractérisée en ce que** l'au moins un capteur d'oscillations (2.3) est fixé à la plaque de base oscillante (2.1), et sa direction de mesure correspond à la direction de déplacement de la plaque de base oscillante (2.1).

10. Procédé pour le calibrage automatique ou pour le contrôle automatique du calibrage d'une machine d'équilibrage, **caractérisé en ce que** l'on utilise une machine d'équilibrage selon l'une des revendications 6 à 9.

11. Procédé de calibrage automatique selon la revendication 10,
**caractérisé en ce que,** pour chaque plan d'équilibrage prévu d'une pièce de machine ou d'un rotor à équilibrer, seul une course de calibrage est réalisée sans utiliser de poids de calibrage sur le disque de calibrage (1.2) du dispositif de calibrage (1) (2.8) et indépendamment de la position de son axe de rotation.

12. Procédé de calibrage automatique selon la revendication 10 ou 11,
**caractérisé en ce qu'**une course de calibrage est effectuée sans mise en place d'un rotor maître et/ou sans fixation de poids de calibrage supplémentaires.

13. Procédé de calibrage automatique selon l'une des revendications 10 à 12
**caractérisé en ce qu'**une course de calibrage est effectuée pendant le fonctionnement de la machine d'équilibrage avec un rotor ou une pièce de machine à équilibrer inséré et en rotation, dans lequel la vitesse de rotation du rotor ou de la pièce de machine pendant la course de calibrage est inférieure ou supérieure d'au moins 15 à 20 % à la vitesse de rotation de calibrage du dispositif de calibrage (1) (2.8).

14. Procédé de calibrage automatique selon l'une des revendications 10 à 13
**caractérisé en ce que** les étapes suivantes sont réalisées :
(i) mise à disposition d'une valeur de balourd de calibrage [g x mm] définie et d'un angle de calibrage (1.7) défini lorsque le dispositif de calibrage (1)(2.8) est activé,
(ii) mise à disposition d'un signal de tension [V] au capteur d'oscillations (2.3)(2.3.1)(2.3.2) de la plaque de base oscillante (2.1),
(iii) établissement d'une courbe caractéristique de calibrage qui résulte de la relation linéaire entre l'amplitude du balourd généré et la tension mesurée pour un balourd de calibrage déterminé de la machine d'équilibrage et passe par le point zéro, et
(iv) affectation du point du signal de tension fourni, lequel point est déterminé à partir de la courbe caractéristique de calibrage, au balourd de calibrage associé et prise de ladite valeur comme référence pour le processus d'équilibrage suivant à l'aide de l'unité de mesure et de régulation (2.9).

15. Procédé de calibrage automatique selon l'une des revendications 10 à 14,
**caractérisé en ce qu'**il est réalisé avant chaque processus d'équilibrage, à intervalles cycliques ou au cours d'un contrôle de calibrage.

16. Procédé pour le calibrage de base d'une machine d'équilibrage lors de la première mise en service ou lors d'une modification, d'une réparation ou d'un entretien ultérieur, **caractérisé en ce que,** au cours du procédé ou à la suite du procédé, un procédé selon l'une des revendications 10 à 15 est réalisé.

17. Procédé de calibrage selon la revendication 16, **caractérisé en ce qu'**il comprend les étapes suivantes :
(i) calibrage unique de la machine d'équilibrage avec un rotor de référence ou un rotor maître standardisé ou certifié avec un balourd défini ou normalisé
(ii) détermination/mesure de la valeur de balourd de calibrage [g x mm] respective et de l'angle de calibrage (1.7) du dispositif de calibrage (2.8)(1) automatique activé pour un rotor de référence/rotor maître inséré, individuellement et successivement pour chaque plan d'équilibrage (2.7) prévu,
(iii) enregistrement des résultats de mesure de (ii) dans une unité de mesure/de commande/et de régulation électronique (2.9),
(iv) réalisation d'une course de calibrage avec le dispositif de calibrage (1)(2.8) selon l'invention et
(v) contrôle du calibrage par l'application d'un poids de calibrage sur le rotor de référence/rotor maître après une mise à zéro préalable du système de mesure.
